# EUROPEAN PATENT APPLICATION

(11) **EP 3 824 986 A1**
(43) Date of publication of application: **26.05.2021**
(21) Application number: 20208261.6
(22) Date of filing: 18.11.2020
(51) Int. Cl.: B01D 39/08

(54) **ORGANIC OR INORGANC SYNTHETC FIBER, TEXTILE STRUCTURE COMPRISNG SAID FIBER AND AIR TREATING AND FILTERING SYSTEM**

(30) Priority: 22.11.2019 IT 201900021999
(71) Applicant: Soliani EMC S.r.l., 22100 Como (CO) (IT); NextMaterials S.r.l., 20121 Milan (IT); Politecnico di Milano, 20133 Milano (IT)
(72) Inventor: DEL CURTO, Barbara, 20131 Milano (IT); CANDIANI, Gabriele, 20123 Milano (IT); SOLIANI, Ivano, 22100 Como (IT); CIGADA, Alberto, 20123 Milano (IT)
(74) Representative: Gregorj S.r.l.

(57) **Abstract**

The present invention refers to an organic or inorganic synthetic fiber, said fiber being coated: (a) by a first nickel metal layer, (b) by a second layer comprising silver and TiO₂, a textile structure comprising said fiber and an air treatment and filtration system, said system comprising said textile structure, system in which the fiber of the textile structure is irradiated by ultraviolet rays.

## Description

### Technical field of the invention

The present invention refers to systems and methods of filtering and treating air in closed environments, and also refers to systems and methods of treating, abating, and eliminating agents causing the indoor environmental pollution.

The main pollutants are exemplified by bacteria, present in large quantities mostly in environments occupied by a large number of ill persons (hospitals, schools, public transports, waiting rooms, offices, houses, etc.), by solid particulate (TSP) and by volatile organic compounds (VOC).

The air filtration and treating systems and methods according to the present invention are characterized by the fact of abating and eliminating the main air pollutants, particularly in closed environments, in the long term, by maintaining a high efficacy and efficiency, since they are made to regenerate their abating and eliminating activities.

### State of the art

The conventional air cleaning systems are capable of obtaining a suitable TSP filtration level (with reference to the number of air changes per hour made), sometimes also a suitable VOC filtration level (if activated carbon filters are used). However, they fail against bacteria, which despite being trapped by the filters, they anyway proliferate on them, consequently these devices instead of eliminating the bacteria, rapidly become sources of dangerous bacterial contamination.

Indeed, the filters which are nowadays mainly used (HEPA) are characterized by a high capability of abating the solid particulate and bacteria, however they have two main side-effects:
- they quickly clog, so that they must be replaced often,
- the bacteria trapped by the filters proliferate and can become a bacterial infection source.

The problems tied to a bacterial infection, which occur in hospitals due to a bacterial contamination of the air conditioning systems, are well-known.

A second class of widely used filters, are exemplified by the granular-type, mat-type and sponge-type activated carbon filters. The different filters have a different capability of abating the volatile organic compounds, but they are barely effective, even ineffective against the bacteria.

More recently, one of the Applicants has developed and characterized a new prototype of a photocatalytic-type filtration system comprising the use, on conventional activated carbon filters, of a sol-gel of titanium dioxide and illuminated by UV LEDs capable of not only abating TSP and oxidize VOC, but most of all are capable of completely killing the bacteria trapped by the filters.

They are conventional activated carbon filters which, even though are characterized also by an antibacterial action, do not overcome the problems intrinsic to the air filtration systems. Particularly, since the pollutants filtered from the surrounding air settle with time on the photocatalytic surface covering the activated carbons, said surface looses its efficacy, because it is not capable of regenerating due to the mechanical fragility of the activated carbons and their irreversible adsorbing action in relation to TSP, VOC and bacteria trapped on the filter itself. Consequently, over time, the photocatalytic surface loses its bactericide activity and new bacteria settle in the filter, and while the air is filtered, they proliferate becoming a new bacterial infection source. So, there is the need of completely substituting said photocatalytic filtration system with a new one only after a short period of use.

Therefore, the need of developing new systems and methods of filtering and treating air in closed environments was strongly felt, in order to abate and eliminate the agents causing the indoor environmental pollution, such as: bacteria, solid particulate (TSP) and volatile organic compounds (VOC), which are simultaneously capable of maintaining in the long term a high efficacy and efficiency, because they are made to regenerate their abating and eliminating activities, by procedures which are simultaneously simple and highly effective. Therefore, new systems and methods of filtering and treating air, particularly the air present in closed environments, are needed as a valid alternative to one or more of the other types of air filtration systems present on the market, such as HEPA and/or activated carbon filters having different configurations/structures/forms: alveolar/granular/in granules activated carbon [Alveolar-AC] filters, mat activated carbon [Mat-AC] filters, sponge activated carbon [Sponge-AC] filters.

### Summary of the invention

The Applicants pursuing the research of the present technical field, have surprisingly and unexpectedly made, as objects of the present invention:
- an organic or inorganic synthetic fiber, said fiber being coated: (a) by a first nickel metal layer, (b) by a second layer comprising silver and TiO₂;
- a polyester fiber coated: (a) by a first nickel metal layer, preferably said first nickel metal layer has a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1;
- a textile structure, preferably a triaxial textile structure, comprising an organic or inorganic synthetic fiber, said fiber being coated: (a) by a first nickel metal layer, (b) by a second layer comprising silver and TiO₂;

- a triaxial textile structure comprising a polyester fiber coated: (a) by a first nickel metal layer, preferably said first nickel metal layer has a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1;
- an air treating and filtration system, said system comprising:
   a triaxial textile structure comprising an organic or inorganic synthetic fiber, said fiber being coated by: (a) a first nickel metal layer, (b) by a second layer comprising silver and TiO₂,
   said fiber being irradiated by an ultraviolet radiation such as UVA, UVB, UVC, preferably an ultraviolet radiation having a wavelength ≤ 365 nm;
- an air treating and filtration system, said system comprising:
   a triaxial textile structure comprising a polyester fiber coated: (a) by a first nickel metal layer, preferably said first nickel metal layer having a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1,
   said fiber being irradiated by an ultraviolet radiation such as UVA, UVB, UVC, preferably an ultraviolet radiation having a wavelength ≤ 365 nm.

### Description of the figures

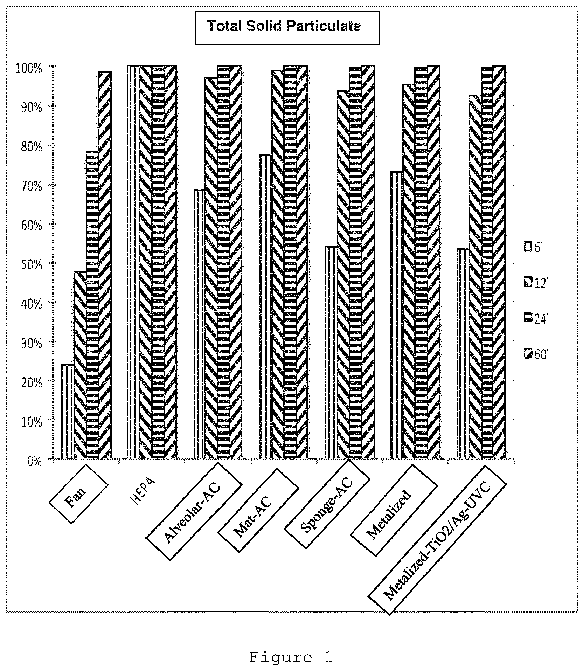

Figure 1 shows, by a histogram graph, the percentages (%) of abatement of the Total Solid Particulate (TSP) after 6, 12, 24 and 60 minutes of air filtration in a closed system (indicated by 6', 12', 24' and 60') by: the filtration system according to one of the embodiments of the present invention, a triaxial textile structure of polyester metalized by nickel and coated by a layer of TiO₂/Ag irradiated by UVC rays, indicated by "Metalized-TiO₂/Ag-UVC", in comparison with, all the conditions being equal, other filtration systems: HEPA, alveolar/granular/in granules activated carbon [Alveolar-AC] filters, mat activated carbon [Mat-AC] filters, sponge activated carbon [Sponge-AC] filters, and also the filtration system formed by a triaxial textile structure of polyester metalized by nickel, using, as a reference, the particulate abatement in the time intervals after 6, 12, 24 and 60 minutes inside the closed system, without filtration systems, indicated as "Fan".

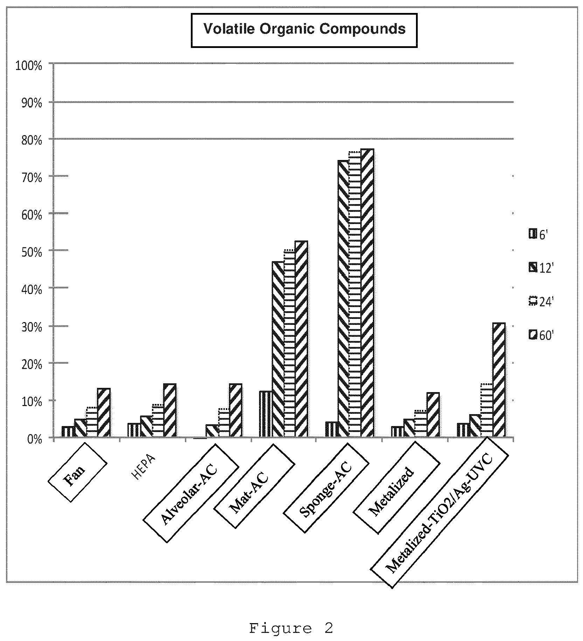

Figure 2 shows, by a histogram graph, the percentages (%) of abatement of the volatile organic compounds (VOC) after 6, 12, 24 and 60 minutes of air filtration of a closed system (indicated by 6', 12', 24' and 60') by: the filtration system according to one of the embodiments of the present invention, a triaxial textile structure of polyester metalized by nickel and coated by a layer of TiO₂/Ag irradiated by UVC rays, indicated as: "Metalized-TiO₂/Ag-UVC, in comparison with, all the conditions being equal, other filtration systems: HEPA, alveolar/granular/in granules activated carbon [Alveolar-AC] filters, mat activated carbon [Mat - AC] filters, sponge activated carbon [Sponge-AC] filters, and also the filtration system formed by a triaxial textile structure of polyester metalized by nickel [Metalized], using, as a reference, the abatement of the particulate in the time intervals after 6, 12, 24 and 60 minutes inside the closed system, without filtration systems, indicated as "Fan".

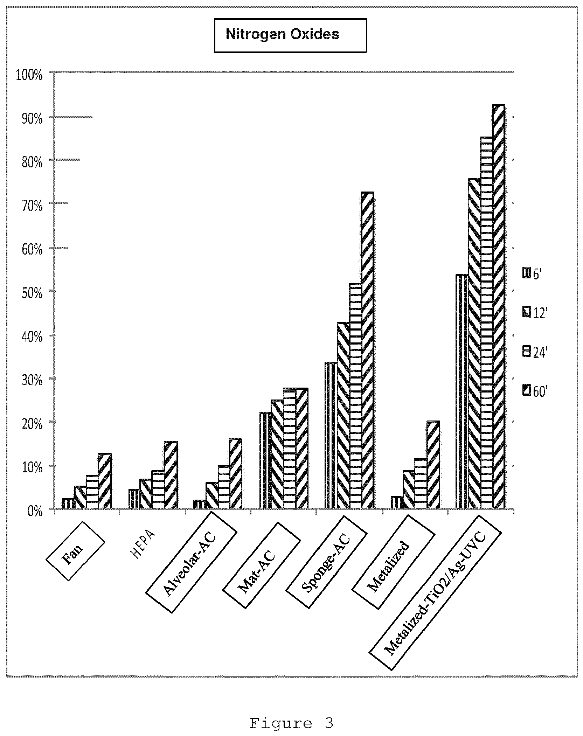

Figure 3 shows, by a histogram graph, the percentages (%) of abatement of mixed oxides of nitrogen (NOₓ) after 6, 12, 24 and 60 minutes of air filtration of a closed system (indicated by 6', 12', 24' and 60') by: the filtration system according to one of the embodiments of the present invention, a triaxial textile structure of polyester metalized by nickel and coated by a layer of TiO₂/Ag irradiated by UVC rays, indicated by "TiO₂/Ag Metalized-UVC", in comparison, all the conditions being equal, with the other filtration systems: HEPA, alveolar/granular/in granules activated carbon [Alveolar-AC] filters, mat activated carbon [Mat-AC] filters, sponge activated carbon [Sponge-AC] filters, and also the filtration system formed by a triaxial textile structure of polyester metalized by nickel [metalized], by using as a reference the abatement of particulate in the time intervals after 6, 12, 24 and 60 minutes inside the closed system, without filtration systems, indicated by the word "Fan".

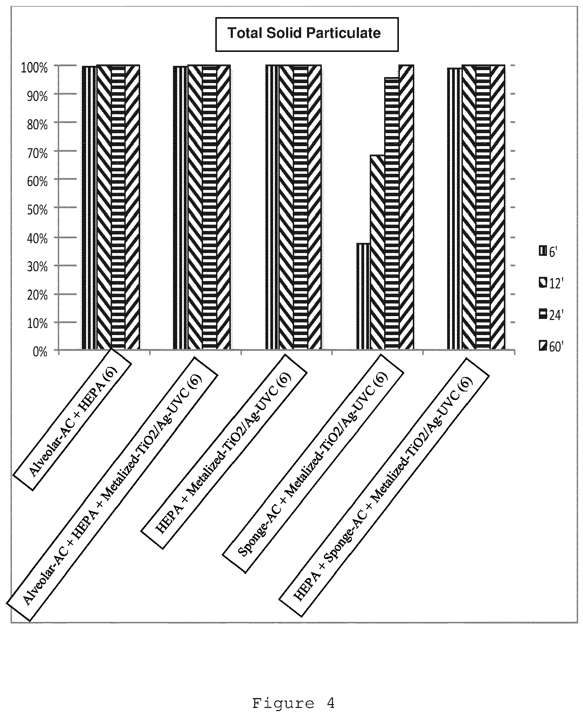

Figure 4 shows, by a histogram graph, the percentages (%) of abatement of the total solid particulate (TSP) after 6, 12, 24 and 60 minutes of air filtration of a closed system (indicated by 6', 12', 24' and 60') for each of the combinations described in the following: Alveolar-AC + HEPA (6 tests), Alveolar-AC + HEPA + Metalized-TiO₂/Ag-UVC (6 tests), Sponge-AC + Metalized-TiO₂/Ag-UVC (6 tests), HEPA + Metalized-TiO₂/Ag-UVC (6 tests), HEPA + Sponge-AC + Metalized-TiO₂/Ag-UVC (6 tests).

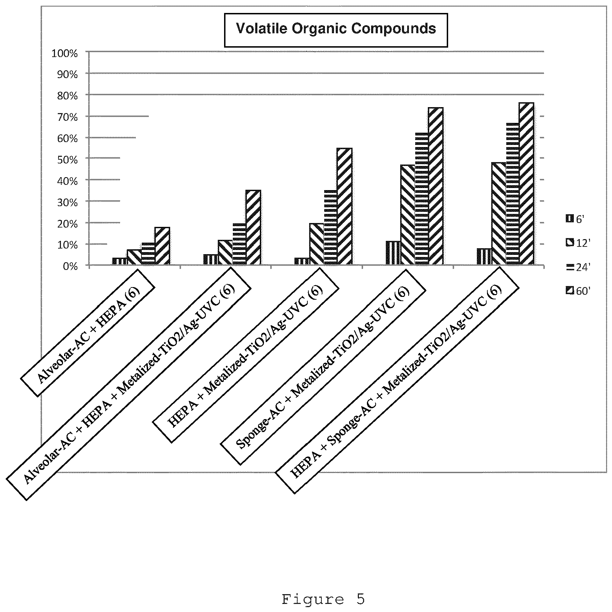

Figure 5 shows, by a histogram graph, the percentages (%) of abatement of Volatile Organic Compounds (VOC) after 6, 12, 24 and 60 minutes of air filtration of a closed system (indicated by 6', 12', 24' and 60') for each of the combinations described in the following: Alveolar-AC + HEPA (6 tests), Alveolar-AC + HEPA + Metalized-TiO₂/Ag-UVC (6 tests), Sponge-AC + Metalized-TiO₂/Ag-UVC (6 tests), HEPA + Metalized-TiO₂/Ag-UVC (6 tests), HEPA + Sponge-AC + Metalized-TiO₂/Ag-UVC (6 tests).

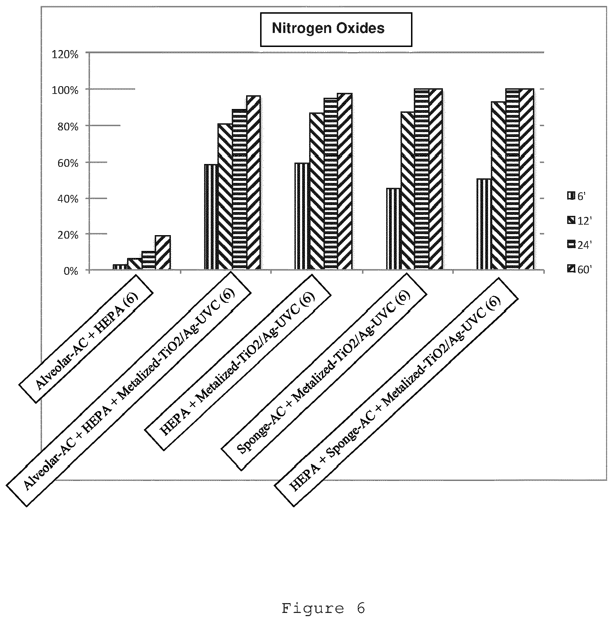

Figure 6 shows, by a histogram graph, the percentages (%) of abatement of the Mixed Oxides of Nitrogen (NOₓ) after 6, 12, 24 and 60 minutes of air filtration of a closed system (indicated by 6', 12', 24' and 60') for each of the combinations described in the following: Alveolar-AC + HEPA (6 tests), Alveolar-AC + HEPA + Metalized-TiO₂/Ag-UVC (6 tests), Sponge-AC + Metalized-TiO₂/Ag-UVC (6 tests), HEPA + Metalized-TiO₂/Ag-UVC (6 tests), HEPA + Sponge-AC + Metalized-TiO₂/Ag-UVC (6 tests).

### Detailed description of the invention and of the embodiments thereof

Therefore, it is an object of the invention:
- an organic or inorganic synthetic fiber, preferably selected in the group comprising: polyester, polyamide, aromatic polyamides, para-aramids (Kevlar®), meta-aramids (Nomex®), carbon fibers, glass fibers or pure silica fibers, more preferably polyester fibers, said fiber being coated: (a) by a first nickel metal layer, preferably said first nickel metal layer having a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1.

A further preferred embodiment of the present invention is:
- a polyester fiber coated: (a) by a first nickel metal layer, preferably said first nickel metal layer having a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1.

It is a further object of the present invention:
- a textile structure, preferably a textile triaxial structure, comprising an organic or inorganic synthetic fiber, said fiber being preferably selected in the group comprising: polyester, polyamide, aromatic polyamides, para-aramids(Kevlar®), meta-aramids (Nomex®), carbon fibers, glass fibers or pure silica fibers, more preferably polyester fibers, said fiber being coated: (a) by a first nickel metal layer, preferably said first nickel metal layer having a thickness not less than 150 nm, (b) by a second layer comprising silver: silver in a metal form or silver in a salted or complexed or chelated form, preferably the dimensions thereof being in the nano range, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1.

A further preferred embodiment of the present invention is:
- a triaxial textile structure comprising a polyester fiber coated: (a) by a first nickel metal layer, preferably said first nickel metal layer has a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1.

It is a further object of the present invention:
- a system for treating and filtering air, preferably the air in closed environments, said system comprising:
   a triaxial textile structure comprising an organic or inorganic synthetic fiber, said fiber being preferably selected in the group comprising: polyester, polyamide, aromatic polyamides, para-aramids (Kevlar®), meta-aramids (Nomex®), carbon fibers, glass fibers or pure silica fibers, more preferably polyester fibers, said fiber being coated: (a) by a first nickel metal layer, preferably said first nickel metal layer having a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1,
   said fiber being irradiated by an ultraviolet radiation such as UVA, UVB, UVC, preferably an ultraviolet radiation having a wavelength ≤ 365 nm, more preferably an ultraviolet radiation having a wavelength comprised in the range/band from 254 nm to 365 nm.

A further preferred embodiment of the present invention is:
- an air treatment and filtration system, said system comprising:
   a triaxial textile structure comprising a polyester fiber coated: (a) by a first nickel metal layer, preferably said first nickel metal layer has a thickness not less than 150 nm, (b) by a second layer comprising silver: silver in a metal form or silver in a salted or complexed or chelated form, preferably the dimensions thereof being nanosized, and TiO₂, preferably anatase, preferably the ratio by weight of TiO₂ to silver is comprised in the range from 25:1 to 37:1, more preferably from 27:1 to 35:1, still more preferably from 29:1 to 33:1, the most preferred range being from 30:1 to 32:1,
   said fiber being irradiated by an ultraviolet radiation such as UVA, UVB, UVC, preferably an ultraviolet radiation having a wavelength ≤ 365 nm, more preferably an ultraviolet radiation having a wavelength comprised in the range/band from 254 nm to 365 nm.

According to the present invention the term "ultraviolet radiation" means a UV electromagnetic radiation having a wavelength comprised in the range/band from 400 nm to 100 nm, such as UVA radiations having a wavelength comprised in the ramge/band from 400 to 315 nm, UVB radiations having a wavelength comprised in the range/band from 315 to 280 nm, UVC radiations having a wavelength comprised in the range/band from 280 to 100 nm.

According to the present invention, the term "textile structure" means a textile structure made of weft-and-warp fabrics, ladderproof fabrics, knitted fabrics, non-woven fabrics, triaxial fabrics, preferably the term "triaxial textile structure" means a textile structure of triaxial fabrics: woven by fibers arranged along the three coordinate axes of the space.

According to the present invention, the term "triaxial fabrics" means fabrics having organic or inorganic synthetic fibers according to anyone of the embodiments of the present invention, preferably a triaxial fabric of polyester fibers, wherein the fiber/s is/are arranged along the three coordinate axes of the space, the term "triaxial fabrics" means particularly the triaxial fabrics of polyester fiber, wherein the fiber/s has/have a thickness, and the number of fibers by unit volume of the triaxial fabric are those of the triaxial fabrics commonly found on the market.

According to the present invention, the word "silver" means silver in a metal form or silver in a salted or complexed or chelated form, the dimensions thereof being nanosized.

According to the present invention, the term "silver in the salted or complexed or chelated form" means silver in an ionic salted form or silver in a complexed metal form or silver in a chelated metal form; examples of silver in a salted form - the term "silver in a salted form" meaning all the silver salts having a solubility constant product Kps less than or equal to 1 x 10⁻⁴ such as silver nitrate and equivalents, preferably silver salts having a Kps equal to or less than 9.9 10⁻⁵ - are for example: Ag₂AsO₄, AgBr, Ag₂CO₃ , AgCl , Ag₂CrO₄, AgCN, Ag₂O (Ag⁺ + OH⁻), AgI, Ag₃PO₄, Ag₂SO₃, Ag₂SO₄, Ag₂S, AgSCN, AgC₂H₃O₂, AgBrO₃, Ag₂CrO₄, Ag₂(CN)₂, Ag₂Cr₂O₇, AgOH, AgIO₃, AgNO₃ Ag₂C₂O₄, AgF.

The process of preparing the organic or inorganic synthetic fiber, according to anyone of the embodiments according to the present invention, and also the corresponding textile structure comprising said fiber, according to anyone of the embodiments according to the present invention, provides a first coating of the fiber by nickel metal (a), through two successive steps: a first step of chemically depositing nickel, the step (i) of chemically depositing nickel, being followed by a second step, the step of electrolytically depositing nickel, the step (ii) of electrolytically depositing nickel, in order to obtain (a) the first nickel metal layer according to the present invention.

The second layer (b) comprising silver and TiO₂ is applied to the first nickel metal layer by well-known sol-gel coating techniques.

Particularly, it is observed that the steps of activating and accelerating the synthetic fiber, preceding the step (i) of chemically depositing the first nickel layer, are performed according to well-known procedures and conditions as a function of the different form of the synthetic fiber and as a function of the textile structure type by which the fiber is configured. Also for this reason, the activating and accelerating pre-treatments can be preceded, as a function of the form of the synthetic fibers and configuration of the textile structure, by degreasing and neutralization steps, or by baths with a sweller and conditioner, pre-activation baths, etcetera.

In a further preferred embodiment object of the present invention, between the step (i) of chemically depositing nickel and the following step (ii) of electrolytically depositing nickel, in order to obtain (a) the first nickel metal layer, according to the present invention, it is provided a step of washing the textile structure by the following sequence of: a spray static washing, optionally followed by a conditioning of the textile structure in an acid bath for some minutes at room temperature.

The grammage of the coarse textile structure, in other words before subjecting it to a metallization, varies for example from 40 to 200 g/m².

With reference to the nickel chemical deposit on the textile structure based on organic or inorganic synthetic fibers, it is a stable, reliable, established, known treatment generally performed at temperatures slightly more than the room temperature, preferably from 30 to 40°C, in a bath with a slightly alkaline pH, preferably a pH from 8.5 to 9.5, by baths with nickel halide, preferably nickel chloride.

With reference to the nickel electrolytic deposit, the baths in which the treatment is performed are based on salts of nickel halides, preferably nickel chloride, having a slightly acid pH and an organic-base refiner, optionally with small amounts of shining agents (generally: organic acids of the benzoic, acetic, and carbonic type with the presence of alkyl-ether, hydroxyethylether, chlorobenzaldehyde, and phenylbutenone groups).

The textile structure proceed on electrified metal cylinders acting as a cathode contact. The anodes are formed by baskets filled with nickel metal. The depositing step is performed on all the surfaces of the textile structure.

The electric continuity and cooling are ensured by continuously spraying the fabric on the electrified cylinders by the bath itself obtained by bypassing a portion of the circulating flow.

With reference to the operative conditions, it is noted the set voltage of the rectifier is less than or equal to 7 Volt, preferably from 4 to 7 Volt, the cathode current density of the textile structure having an average grammage for example of 100 g/m², is less than or equal to 1 A/dm², preferably from 0.7 to 1 A/dm².

Moreover, as a further preferred embodiment of the present invention, the step of electrolytically depositing nickel is performed, all conditions being equal, in three consecutive tanks.

The layer comprising TiO₂ and silver is applied to the nickel metal coating layer of the organic or inorganic synthetic fibers by using the sol-gel or spraying or dipping methods, these methods are well known for applying layers comprising TiO₂ on a great variety of surfaces to be coated.

The layer comprising TiO₂ and silver has a minimum nanosized thickness, preferably not less than 50 nm, more preferably not less than 100 nm.

For example, among the several embodiments for depositing sol-gel, it is possible to use those technologies using a sol-gel preparation comprising TiO₂ and silver, wherein water-based suspensions/dispersions/emulsions are obtained by using different additives, such as silica, acids, aliphatic alcohols, according to well-known methods.

With reference to the irradiation by ultraviolet radiations, these can be generated by common ultraviolet sources, such as UVA sources, for example UVA LED, UVC sources, such as UVC lamp, or UVB sources.

According to the present invention, further embodiments are the following further embodiments:
1. An organic or inorganic synthetic fiber, said fiber being coated: (a) by a first nickel metal layer, (b) by a second layer comprising silver and TiO₂.
2. A fiber according to the embodiment 1, wherein said fiber is selected in the group comprising: polyester, polyamide, aromatic polyamides, para-aramids (Kevlar®), meta-aramids (Nomex®), carbon fibers, glass fibers or pure silica fibers, more preferably polyester.
3. A fiber according to the embodiment 1, wherein the nickel metal layer has a thickness not less than 150 nm.
4. A fiber according to the embodiment 1, wherein the second layer comprises silver preferably selected in the group comprising: silver in a metal form or silver in a salted or complexed or chelated form, the dimensions thereof being nanosized.
5. A fiber according to the embodiment 1, wherein the second layer comprises anatase (TiO₂).
6. A fiber according to the embodiment 1, wherein TiO₂ and silver are present by a ratio by weight between each other which is comprised in the range from 25:1 to 37:1, more preferably from 27:1 to 35:1, still more preferably from 29:1 to 33:1, the most preferred range being from 30:1 to 32:1.
7. A textile structure comprising an organic or inorganic synthetic fiber, said fiber being coated: (a) by a first nickel metal layer, (b) by a second layer comprising silver and TiO₂.
8. A textile structure according to the embodiment 7, wherein said structure is a triaxial textile structure.
9. A textile structure according to the embodiment 7, wherein the synthetic fiber is selected in the group comprising: polyester, polyamide, aromatic polyamides, para-aramids (Kevlar®), meta-aramids (Nomex®), carbon fibers, glass fibers or pure silica fibers, more preferably polyester.
10. A textile structure according to the embodiment 7, wherein the nickel metal layer has a thickness not less than 150 nm.
11. A textile structure according to the embodiment 7, wherein the second layer comprises silver preferably selected in the group comprising: silver in a metal form or silver in a salted or complexed or chelated form, the dimensions thereof being nanosized.
12. A textile structure according to the embodiment 7, wherein the second layer comprises anatase (TiO₂) .
13. A textile structure according to the embodiment 7, wherein TiO₂ and silver are present by a ratio by weight between each other which is comprised in the range from 25:1 to 37:1, more preferably from 27:1 to 35:1, still more preferably from 29:1 to 33:1, the most preferred range being from 30:1 to 32:1.
14. An air treating and filtration system, said system comprising:
   a triaxial textile structure comprising an organic or inorganic synthetic fiber, said fiber being coated: (a) by a first nickel metal layer, (b) by a second layer comprising silver and TiO₂,
   said fiber being irradiated by an ultraviolet radiation, preferably an ultraviolet radiation having a wavelength ≤ 365 nm.
15. A system according to the embodiment 14, wherein the ultraviolet radiation has a wavelength comprised in the range/band from 100 nm to 365 nm.
16. A system according to the embodiment 14, wherein the synthetic fiber is selected in the group comprising: polyester, polyamide, aromatic polyamides, para-aramids (Kevlar®), meta-aramids (Nomex®), carbon fibers, glass fibers or pure silica fibers, more preferably polyester.
17. A system according to the embodiment 14, wherein the nickel metal layer has a thickness not less than 150 nm.
18. A textile structure according to the embodiment 14, wherein the second layer comprises silver preferably selected in the group comprising: silver in a metal form or silver in a salted or complexed or chelated form, the dimensions thereof being nanosized.
19. A textile structure according to the embodiment 14, wherein the second layer comprises anatase (TiO₂).
20. A textile structure according to the embodiment 14, wherein TiO₂ and silver are present by a ratio by weight between each other which is comprised in the range from 25:1 to 37:1, more preferably from 27:1 to 35:1, still more preferably from 29:1 to 33:1, the most preferred range being from 30:1 to 32:1.

### ADVANTAGES

The obtained advantages of the present invention, both as a synthetic fiber, as herein described according to anyone of the embodiments thereof, and as a textile structure comprising said synthetic fiber, structure as herein described according to anyone of the embodiments thereof, and as an air treatment and filtration system, a system comprising said textile structure, a system as herein described according to anyone of the embodiments thereof, are the following:
- of being obtained by simple, well-known, and reliable methods, having high yields in industrial applications, both by the step of coating by a nickel metal layer and the following step of coating by a layer comprising TiO₂ and silver;
- of obtaining the purpose of abating and eliminating the agents causing the indoor environmental pollution, such as bacteria, solid particulate (TSP), volatile organic compounds (VOC), and mixed oxides of nitrogen (NOₓ) also in the long term, by maintaining high efficacy and efficiency, because they are made to regenerate their abatement and elimination activities, through simple and extremely effective procedures: by simply washing them with water and detergents, also in conditions of a substantial chemical-physical stress, for example those occurring in a dishwashing machine in the presence of chemical agents at high temperature and water vapor;

- the capability of maintaining the activity of abating and eliminating said pollutants: bacteria, solid particulate (TSP), volatile organic compounds (VOC), and mixed oxides of nitrogen (NOₓ), also after 10 washing cycles in a dishwashing machine;
- the capability, due to their structure, of regenerating their filtration capability of stopping and abating the polluting agents filtered from the surrounding air, since the deposit over time, on the surface of the photocatalytic layer coating the nickel metal layer, of the built-up polluting agents, is eliminated by washing the textile structure as according to the invention. This is made possible by the following two main properties of the synthetic fiber, as herein described according to anyone of the embodiments thereof object of the present invention, and of the textile structure comprising said synthetic fiber, structure as herein described according to anyone of the embodiments thereof of the present invention:

- achieving a high strength to substantial chemical-physical stresses,
- and maintaining, also after said chemical-physical stresses, the filtration characteristics of treating and abating, possibly also by a photocatalytic action, said polluting agents,
   said properties stemming from the structural chemical intrinsic characteristics of the synthetic fiber, as herein described according to anyone of the embodiments thereof of the present invention, and from the textile structure comprising said synthetic fiber, structure as herein described according to anyone of the embodiments thereof of the present invention.

A further advantage is the possibility of combining the air treatment and filtration system according to anyone of the embodiments according to the present invention with one or more of the other types of air filtration systems on the market, such as HEPA and/or activated carbon filters with different configuration/structure/form: alveolar/granular/in granules activated carbon filters, mat activated carbon filters, sponge activated carbon filters. Combining them does not cause any negative cross interference of the corresponding polluting agents filtration properties.

Document WO 2008/001405 A2 describes a filtration device for abating pollutants in a fluid or gas, comprising a metal or metalized filtration fabric, such as stainless steel, special steels, among which nickel steels or nickel-alloy steels, carbon steels, bronze, glass fibers, etcetera, coated by nanostructural TiO₂ with 10% of anatase, exhibiting a photocatalytic activity for abating the pollutants in filtered fluids, when they are exposed to radiation sources comprised between the visible light and UV light. Said activity of photocatalytically abating pollutants, improves by the presence also of nanoparticles of different materials, for example silver.

Comparing what is described in document WO 2008/001405 A2 and the present invention which refers:
to an air treatment and filtration system comprising a textile structure whose fiber, particularly coated by: (a) a first nickel metal layer, (b) a second layer comprising the particular combination of silver and TiO₂, is irradiated by ultraviolet rays;
the differences which seems to be between the filtration system of document WO 2008/001405 A2 and the present invention are the particular combination of the presence of a nickel metal layer between the support fabric as described according to the present invention, and the nanoparticles of TiO₂, preferably anatase, combined with silver.

Document EP 2 397 577 A1 describes metalized textile structures having the electric conduction and electromagnetic shielding properties, wherein some fibers are coated by a first nickel layer, a second copper or silver layer, and a third zinc layer, however this document does not mention or makes reference that said metalized textile structures coated by three metal layers, of which the first is made of nickel, exhibit neither at least a minimum capability of abating pollutants nor a photocatalytic interaction capability with electromagnetic radiations: on the contrary, they exhibit the shielding/reflecting properties, but they do not interact with electromagnetic radiations.

As hereinbefore described, a further specific technical effect of the present invention, which is not described, suggested or disclosed in the cited prior art documents, is that the pollutant abatement effect of the filtration system is maintained, consequently of the corresponding textile structure and fiber composing it, according to the present invention, also after washing said filtered systems in dishwashing machines, in other words the filtration properties of the system, and therefore of the corresponding textile structure and fiber composing it, are not jeopardized after a treatment under high chemical-physical stress conditions.

Washing in a dishwashing machine enables to clean the surface of fibers composing the textile structure of the filtration systems according to the present invention, eliminating the built-up pollutants present on the surfaces of said fibers. Also, after a number of washings, the capability of abating said pollutants of the filtration system according to the present invention, is maintained.

This technical problem and the solution thereof, obtained by the filtration system and therefore the corresponding textile structure and fiber composing it, according to the present invention, are not suggested neither in document WO 2008/001405 A2 nor in document EP 2 397 577 A1, even though they are considered alone or in a combination thereof.

Document WO 2008/001405 A2 describes the system as a system capable of keeping its photocatalytic pollutant abatement activity also in the presence of substantial deposits of the pollutants themselves (as for example described in the example 3 of document WO 2008/001405 A2) .

Document WO 2008/001405 A2 does not cite the problem of developing filtration systems capable of maintaining the pollutant abatement properties also after washing them in a dishwashing machine in order to obtain a regeneration of the filtration systems, by eliminating from the filter surfaces, the built-up pollutants, in other words to maintain the properties of filtrating the pollutants also after a treatment in a condition of high chemical-physical stresses (as occurs in a dishwashing machine) .

Moreover, document EP 2 397 577 A1 describes textile structures coated by at least three overlapped metal layers, wherein a TiO₂ is never present, in order to obtain not photocatalytic pollutant filtration and abatement systems, but systems with significant electric conductivity and electromagnetic field shielding properties, in other words systems which do not interact with the electromagnetic radiations.

Document EP 2 397 577 A1 tackles with technical problems (electromagnetic shielding and high electric conductivity) different from the ones solved by the present invention (a filtration system maintaining its efficacy also after being washed in a dishwashing machine in order to eliminate the built-up pollutants deposited on the surfaces of fibers forming the textile structure of the filtration system itself), and different from the technical problems tackled by document WO 2008/001405 A2 (for obtaining a photocatalytic pollutant abatement and filtration system effective also in the presence of said built-up pollutants on the photocatalytic surface).

In the same way, the technical solutions (a textile structure coated by at least three overlapped metal layers wherein TiO₂ is not present) provided by document EP 2 397 577 A1 and the technical solutions provided by document WO 2008/001405 A2 (a metal fabric coated by nanoparticles of TiO₂ and silver metal) are different from the ones provided by the present invention: a textile structure of an organic or inorganic fiber coated by a first nickel metal layer and by a second layer of TiO₂ nanoparticles and silver.

From the above disclosed teachings of the state of the art, it is also clear that it is not obvious for a person skilled in the art that the presence of the nickel metal layer according to the present invention does not adversely affect, in other words does not reduce the photocatalytic activity of abating the pollutants in a filtration system object of the present invention, but, on the contrary, can improve it, for example by enabling to maintain said photocatalytic abatement activity also after washings in a dishwashing machine, or, due to the specific combination of TiO₂ and silver applied to the nickel metal layer, can exhibit a photocatalytic pollutant abatement activity even greater than the one of the filtration system described in document WO 2008/001405 A2.

### Examples

An embodiment of a triaxial textile structure made of a polyester fiber coated by a first nickel layer and by a second layer comprising TiO₂ and silver, according to the invention.

### Example 1

A triaxial textile structure made of polyester fabric (having an average grammage of 100 g/m²) is subjected to the following consecutive processing steps:

### Degreasing

in order to eliminate possible contaminations caused by the weaving processings, the fabric is dipped in a sodium hydroxide based alkaline bath for 10 minutes at 70°C.

### Neutralization

Then, the processing residuals of the preceding step are eliminated before the following activation step which is performed in an acid environment. The step is performed in an acid bath (chloridric acid 30% 60 ml/l), with a bath temperature of 25°C and a dipping time from 2 to 5 minutes.

### Activation

In order to activate the surface of the synthetic fiber for the following chemical deposit, the fabric is dipped for 5-10 minutes in a bath containing palladium chloride (50-100 mg/l) and tin chloride (4 g/l) at a temperature of 35°C.

### Acceleration

In order to clean the surface of the fabric from colloidal residuals after the preceding treatment, the fabric is dipped for 2-4 minutes in a bath containing fluorurated acids (20 ml/l) at 25°C.

### Chemical nickelage (nickel chemical deposit)

The fabric after the acceleration treatment, is dipped for 5-10 minutes, in baths with a pH of 8.5 - 9.5 at 30-40°C in the presence of nickel chloride (4-7 g/l) and sodium hypophosphite (18 g/l).

### Nickel electrolytical deposition

The fabric, after the treatment in nickel baths, is subjected to an electrolytical nickel deposition by dipping it in a bath, at 50°C, comprising nickel chloride (65 g/l) and potassium chloride (200 g/l) with a pH of 5.0 - 5.5 in the presence of shining agent traces according to the above described general operative conditions.

A triaxial fabric made of polyester metalized by a nickel metal layer is obtained.

### Spraying deposition of the layer comprising TiO₂ and silver salts (AgCl)

Starting with a composition comprising (% by weight): 95% water, 2% titanium bioxide, 1.5% functionalized silica, 2% isopropyl alcohol, ≈1% acids, ≈1% dopant, 1% silver salt and <0.5% methanol by using a sol-gel technology a layer comprising TiO₂ and silver is applied by spraying it on the metalized surface of the nickel coated polyester.

### Example 2

By using a commercial depurator containing a tangential fan and an ionizer, tests of the capability of abating the following polluting agents in closed spaces, were made:
▪ **"TSP":** total solid particulate (from PM1 to PM10 - TSP) measured by a device Aceronet 531 (Met One Instruments),
▪ **"VOC":** volatile organic compounds (VOC) measured by the device IAQmeter (GrayWolf).
▪ **"NO":** mixed oxides of nitrogen (NOₓ) measured by the device IAQmeter (GrayWolf),
by the several systems for filtering and abating said polluting agents, specifically classified as:
   ▪ **Fan:** device without any systems for filtering and abating pollutants;
   ▪ **HEPA:** HEPA type filter having a zig-zag structure;
   ▪ **Alveolar-AC:** filter having an alveolar structure containing activated carbon granules with a pre-filter;
   ▪ **Mat-AC:** mat-type activated carbon filter;
   ▪ **Sponge-AC:** sponge-type activated carbon filter;
   ▪ **Metalized:** filter of triaxial polyester textile made of a polyester fiber metalized by nickel (manufactured as described in example 1, but without the layer comprising silver and TiO₂);
   ▪ **Metalized-TiO₂/Ag-UV:** this is a filter as the before one described treated by titanium dioxide and illuminated by an ultraviolet source: both UVA sources, such as UVA LED, and UVC sources, such as a UVC lamp, as the Air Knight UVC, were used.

The tests were made by burning a cigarette inside a closed space, a Glove Box by Iteco of 330 liters, without any air exchange with the outside, and starting the device after 16 minutes after lighting the cigarette and monitoring the values of the main pollutants for 60 minutes, which usually reached the maximum value between 0 and 2 minutes after turning on the fan, by using separately the above described several systems.

All the filtration systems were characterized by the same filtration surfaces and thicknesses. At the end of the test, the abatement percentage was calculated at 6, 12, 24, and 60 minutes (6', 12', 24', and 30') of TSP, VOC and NO, evaluated as a percentage with respect to the maximum value reached between 0 and 2 minutes from the turning-on of the device, by the compared different filtration systems.

The obtained histograms are shown in Figures 1, 2 and 3.

With reference to the TSP, the HEPA filters have, as it is known, the best behavior. The other types of filters had comparable behaviors.

With reference to the VOC, the HEPA and Alveolar-AC filters show an ineffective behavior analogous to the one of the fan. The Sponge-AC filter has a very high efficacy, followed by the mat-AC filter. The Metalized-TiO₂/Ag-UVC filter is more effective than the metalized filter, demonstrating the photocatalytic effect on VOC. With reference to the NO, the HEPA and Alveolar-AC filters show, also in this case, an ineffective behavior, analogous to the one of the fan. The Metalized-TiO₂/Ag-UVC filter has a very high efficacy, followed by the Sponge-AC and mat-AC filters.

### Example 3

Tests for abating the pollutants TSP, VOC and NO, identical to the one of the example 2, were performed by using the filtration and abatement systems with the following combinations (according to the order by which the filters are contacted by the entering air), by performing 6 tests (the value is in parentheses) for each of the combinations described in the following:
▪ Alveolar-AC + HEPA (6 tests)
▪ Alveolar AC + HEPA + Metalized-TiO₂-UVC (6 tests)
▪ Sponge-AC + Metalized-TiO₂-UVC (6 tests)
▪ HEPA + Metalized-TiO₂-UVC (6 tests)
▪ HEPA + Sponge-AC + Metalized-TiO₂-UVC (6 tests)

The obtained histograms are illustrated in Figures 4, 5, and 6, and show the average value of the performed tests.

Combining together an Alveolar-AC filter and HEPA filter:
▪ there is a substantial abatement of TSP, unfortunately the device is substantially ineffective to VOC and NOₓ.
▪ from the test 1 to test 6, the behavior does not substantially change.

Combining together an Alveolar-AC filter, HEPA filter and a Metalized-TiO₂/Ag-UVC:
▪ the NOₓ abatement is extremely improved,
▪ the VOC abatement is improved,
▪ the capability in abating TSP is kept optimal,
▪ from test 1 to test 6, the behavior does not substantially change.

Combining together a Sponge-AC filter and a Metalized-TiO₂/Ag-UVC filter:
▪ the excellent VOC and NOₓ abatement is confirmed,
▪ but the TSP abatement is reduced,
▪ the VOC abatement capability is degradated from test 1 to test 6.

Combining together a Sponge-AC filter, HEPA filter and a Metalized-TiO₂/Ag-UVC filter:
▪ the behavior is the best among the tested filters,
▪ in comparison with the two-stage filter, the behavior is improved particularly with reference to the TSP abatement.

Combining together a HEPA filter and a Metalized-TiO₂/Ag-UVC filter (6):
▪ the absence of the Alveolar-AC filter does not reduce the VOC abatement, which on the contrary slightly increases,
▪ the absence of the Alveolar-AC filter does not change the TSP and NOₓ abatement.

### Example 4

In order to evaluate the vitality of the bacteria trapped on the filters, two devices provided with a standard filter (Beurer + HEPA without light) and with a three stage filter (Sponge-AC + HEPA + Metalized-TiO₂/Ag-UVC with an Air Knight UVC light) were kept turned on for 48 hours in a room occupied by many persons. It is observed that only the Metalized-TiO₂/Ag filter was directly illuminated by the Air Knight UVC light.

Then, the presence of alive bacteria was evaluated on these filters, by an elution in a medium culture LB and incubation for 24 hours at 37°C by stirring.

The bacteria presence was evaluated both by measuring the concentration (cfu/ml) [concentration and average concentration of the colony-forming units: cfu/ml] and by measuring the optical density (OD) .

The results are shown in table 1.

**Table 1**

| **Filter** | **Concentration (cfu/ml)** | **Average concentration (cfu/ml)** | **OD** | **Average OD** |
|---|---|---|---|---|
| **HEPA** | 2.87E+08 | 2.36E+08 | 0.095 | 0.1015 |
| | 1.86E+08 | | 0.108 | |
| **Alveolar-AC** | 1.16E+08 | 1.16E+08 | 0.073 | 0.088 |
| | 1.16E+08 | | 0.103 | |
| **Mat-AC** | 6.07E+09 | 3.27E+08 | 0.081 | 0.117 |
| | 4.67E+08 | | 0.153 | |
| **Sponge-AC** | 5.70E+08 | 5.29E+08 | 0.095 | 0.084 |
| | 4.87E+08 | | 0.073 | |
| **Metalized-TiO₂-UVC** | 1.17E+06 | 5.86E+05 | 0.004 | 0.05 |
| | 5.17E+03 | | 0.006 | |

| | | | | |
|---|---|---|---|---|
| E+: exponential scientific notation. | | | | |

It is clearly shown that the bacteria concentration is much smaller on the Metalized-TiO₂/Ag-UVC filter than the one present on the other filters.

This result clearly confirms the antibacterial effect of the photocatalysis paired with a UV radiation source, particularly a UVC radiation.

## Claims

1. Organic or inorganic synthetic fiber, said fiber being coated by: (a) a first nickel metal layer, (b) a second layer comprising silver and TiO₂.

2. Fiber according to claim 1, wherein said fiber is selected among the group comprising: polyester, polyamide, aromatic polyamides, para-aramids, meta-aramids, carbon fibers, glass fibers or pure silica, more preferably polyester.

3. Fiber according to claim 1, wherein the nickel metal layer has a thickness not less than 150 nm.

4. Fiber according to claim 1, wherein the second layer comprises silver in a metal form or silver in a salted or complexed or chelated form, preferably the dimensions thereof being in the nano range.

5. Fiber according to claim 1, wherein the second layer comprises anatase (TiO₂).

6. Fiber according to claim 1, wherein TiO₂ and silver are present in a ratio by weight with each other which is comprised in the range from 25:1 to 37:1, more preferably from 27:1 to 35:1, still more preferably from 29:1 to 33:1, the most preferred range being from 30:1 to 32:1.

7. Textile structure comprising an organic or inorganic synthetic fiber, said fiber being coated by: (a) a first nickel metal layer, (b) a second layer comprising silver and TiO₂.

8. Textile structure according to claim 7, wherein said structure is a triaxial textile structure.

9. Textile structure according to claim 7, wherein the synthetic fiber is selected among the group comprising: polyester, polyamide, aromatic polyamides, para-aramids, meta-aramids, carbon fibers, glass fibers or pure silica, more preferably polyester.

10. Textile structure according to claim 7, wherein the nickel metal layer has a thickness not less than 150 nm.

11. Textile structure according to claim 7, wherein the second layer comprises silver in a metal form or silver in a salted or complexed or chelated form, preferably the dimensions thereof being in the nano range.

12. Textile fiber according to claim 7, wherein the second layer comprises anatase (TiO₂).

13. Textile structure according to claim 7, wherein TiO₂ and silver are present in a ratio by weight with each other which is comprised in the range from 25:1 to 37:1, more preferably from 27:1 to 35:1, still more preferably from 29:1 to 33:1, the most preferred ratio being from 30:1 to 32:1.

14. Air treating and filtering system, said system comprising:
a triaxial textile structure comprising an organic or inorganic synthetic fiber, said fiber being coated by: (a) a first nickel metal layer, (b) a second layer comprising silver and TiO₂,
said fiber being irradiated by an ultraviolet radiation, preferably an ultraviolet radiation having a wavelength ≤ 365 nm.

15. System according to claim 14, wherein the ultraviolet radiation has a wavelength comprised in the range/band from 254 nm to 365 nm.

16. System according to claim 14, wherein the synthetic fiber is selected among the group comprising: polyester, polyamide, aromatic polyamides, para-aramids, meta-aramids, carbon fibers, glass fibers or pure silica, more preferably polyester.

17. System according to claim 14, wherein the nickel metal layer has a thickness not less than 150 nm.

18. System according to claim 14, wherein the second layer comprises silver in a metal form or silver in a salted or complexed or chelated form, preferably the dimensions thereof being in nano range.

19. System according to claim 14, wherein the second layer comprises anatase (TiO₂).

20. System according to claim 14, wherein TiO₂ and silver are present in a ratio by weight with each other which is comprised in the range from 25:1 to 37:1, more preferably from 27:1 to 35:1, still more preferably from 29:1 to 33:1, the most preferred range being from 30:1 to 32:1.
